Europäisches Patentamt

European Patent Office

Office européen des brevets

(11) Veröffentlichungsnummer: **0 230 685 B1**

(19)

(12) **EUROPÄISCHE PATENTSCHRIFT**

(45) Veröffentlichungstag der Patentschrift: **22.07.92**

(21) Anmeldenummer: **86201894.2**

(22) Anmeldetag: **30.10.86**

(51) Int. Cl.⁵: **D06F 37/20**, F16F 9/54

(54) **Befestigung des Stossdämpfers in einer Waschmaschine.**

(30) Priorität: **02.11.85 DE 3538973**

(43) Veröffentlichungstag der Anmeldung:
**05.08.87 Patentblatt 87/32**

(45) Bekanntmachung des Hinweises auf die
Patenterteilung:
**22.07.92 Patentblatt 92/30**

(84) Benannte Vertragsstaaten:
**DE ES FR GB IT SE**

(56) Entgegenhaltungen:
**DE-A- 3 041 878**
**FR-A- 1 451 820**
**FR-A- 2 027 928**

(73) Patentinhaber: **Bauknecht Hausgeräte GmbH**
**Am Wallgraben 99**
**W-7000 Stuttgart 80(DE)**

(84) Benannte Vertragsstaaten:
**DE**

(73) Patentinhaber: **WHIRLPOOL INTERNATIONAL**
**B.V.**
**Tarwelaan 58**
**NL-5632 KG Eindhoven(NL)**

(84) Benannte Vertragsstaaten:
**ES FR GB IT SE**

(72) Erfinder: **Nelzow, Hartmann**
**Aldingerstrasse 12**
**W-7050 Waiblingen-Hegnach(DE)**
Erfinder: **Sperling, Horst**
**Heinrich-Rorbeck-Weg 34**
**W-7060 Schorndorf(DE)**

(74) Vertreter: **Meier, Friedrich, Dipl.-Ing.**
**Philips Patentverwaltung GmbH Wenden-**
**strasse 35 Postfach 10 51 49**
**W-2000 Hamburg 1(DE)**

EP 0 230 685 B1

Rank Xerox (UK) Business Services

## Beschreibung

Die Erfindung bezieht sich auf eine Waschmaschine, deren Waschaggregat mittels Federn und Stoßdämpfer im Maschinengehäuse schwingbeweglich gelagert ist und wobei zwischen jedem Stoßdämpferende mit dem Gehäuse und dem Aggregat ein Verbindungsteil vorgesehen ist.

Es ist bekannt, Stoßdämpfer über fest am Gehäuse bzw. am Waschaggregat montierte Lagerböcke oder Winkeleisen zu befestigen. Die Stoßdämpfer können dabei als mit Reibung arbeitende Dämpfer ausgebildet sein (DE-OS 2 000 723). Auch ist es bekannt, hydraulische mit Öl arbeitende Dämpfer zu verwenden (FR-PS 1 451 820).

Auf diesen bekannten Maschinen sind die Verbindungsteile (Lagerböcke, Winkeleisen usw.) fest vormontiert und der Stoßdämpfer wird nachfolgend mittels Bolzen an diesen Teilen befestigt. Im Moment der Montage des Waschaggregates müssen diese Teile mit zusätzlichen Verbindungsmitteln, z.B. Schrauben, befestigt werden.

Diese Art der Befestigung der Stoßdämpfer ist zeitraubend und deshalb kostspielig.

Durch die DE-A-30 41 878 ist ein Stoßdämpfer, insbesondere für Waschmaschinen mit Schleudergang, bekannt geworden, der aus einer über eine Dämpfeinrichtung in einem zylindrischen Rohr längsverschiebbaren Kolbenstange besteht, wobei das an einem Ende durch einen Boden verschlossene Rohr ein Befestigungsauge o.dgl. trägt. Das außerhalb des Rohres befindliche Kolbenstangenende weist einen Fuß auf, der eine Befestigungsplatte trägt, wobei der unter einem Winkel bis 90° von der Befestigungsplatte abstehende Fuß ein elastisches Scharnier bildet. Die Kolbenstange kann mit dem Fuß, dem Scharnier und der Befestigungsplatte einteilig aus Kunststoff bestehen. Ferner kann die Befestigungsplatte abgewinkelt angeformte Laschen und versetzt dazu einen oder mehrere Zapfen aufweisen, die in Schlitze bzw. Bohrungen einer den Stoßdämpfer tragenden Bodenplatte einsteckbar sind, wobei die Befestigungsplatte gegen die Bodenplatte verschraubbar ist. Mit einer derartigen Bauweise soll ein Stoßdämpfer geschaffen werden, der mit weniger Bauteilen auskommt und einfach an einer Bodenplatte montiert werden kann.

Der Erfindung liegt die Aufgabe zugrunde, die Stoßdämpfer ohne zusätzliche Verbindungsmittel mit geringem Arbeitsaufwand beim Montieren gleich am Gehäuse und/oder Waschaggegrat zu befestigen.

Die erfindungsgemäße Waschmaschine ist dadurch gekennzeichnet, daß an jedem Stoßdämpfer mindestens eines der Verbindungsteile zum Maschinengehäuse oder zum Waschaggregat aus zwei gegeneinander federnden Wangen beteiht, die mittels einer Schraubverbindung am Stoßdämpfer befestigt und in geöffnetem Zustand frei durch am Maschinengehäuse oder Waschaggregat vorgesehene Aufnahmeöffnungen hindurchführbar und durch Anziehen der Schraubverbindung verklemmbar sind.

Die erfindungsgemäße Konstruktion schafft die Möglichkeit, das am Stoßdämpfer vormontierte Verbindungsteil ohne zusätzliche Schrauben, Niete usw. am Gehäuse oder am Waschaggregat durch Klemmung zu befestigen. Auf diese Weise wird die Montage der Maschine wesentlich einfacher.

An sich wäre es möglich, die beiden Wangen als separate Teile auszubilden und zwischen diesen eine Feder anzuordnen. Einfacher ist es, daß das Verbindungsteil derart U-förmig ausgebildet ist, daß die Schenkel die Wangen an einem Verbindungssteg bilden. Auf diese Weise bilden die beiden Wangen mit dem federnden Verbindungsteil ein einziges Konstruktionselement, das als Stanzteil hergestellt werden kann.

Gemäß einer weiteren Ausführungsform weisen die einander zugewendeten Seiten der beiden Wangen abgewinkelte Teile mit eingearbeiteten Aussparungen auf, welche die Ränder der Aufnahmeöffnungen umgreifen können. Auf diese Weise wird bei Verklemmung der beiden Wangen eine starre Verbindung zwischen den Wangen und den Öffnungsrändern erreicht. Damit beim Anziehen der Schraubverbindung das Stoßdämpferende nicht verklemmt wird, ist um den Bolzen zwischen die Wangen eine Distanzbuchse eingesetzt.

Die Erfindung wird nachfolgend anhand eines Ausführungsbeispiels näher erläutert. Es zeigen:

Fig. 1 und 2    schematisch eine Waschmaschine in Seiten- und Vorderansicht,

Fig. 3 und 4    vergrößert die Verbindung eines Stoßdämpfers mit dem Gehäuseboden,

Fig. 5, 6, 7    im Schnitt, in Seitenansicht und in Draufansicht ein Verbindungteil.

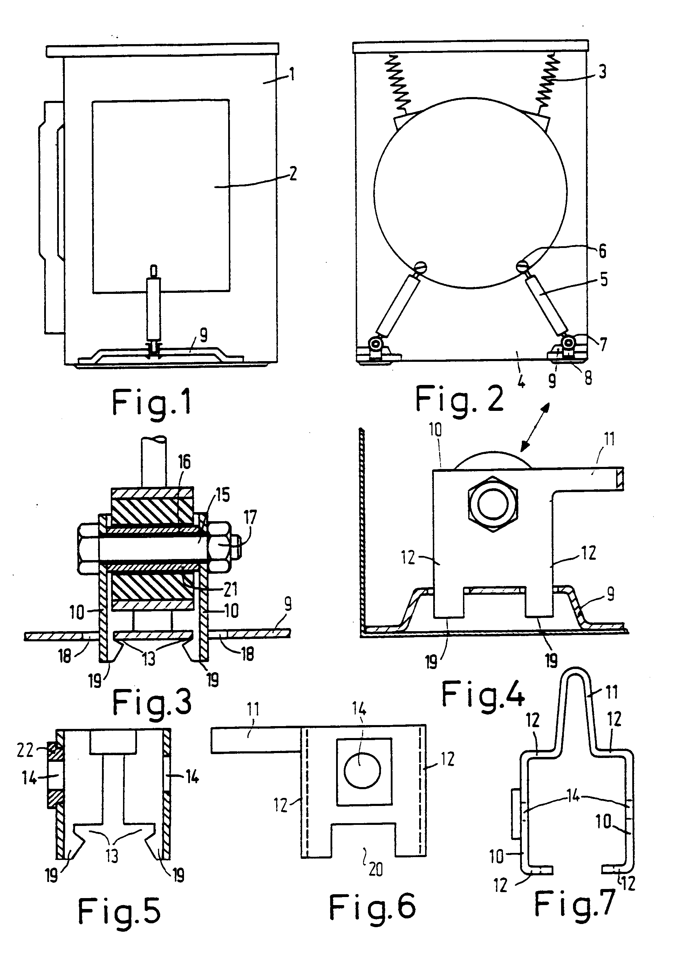

Bei dem in den Fig. 1 und 2 dargestellten Ausführungsbeispiel ist in einem Gehäuse 1 einer Waschmaschine ein aus dem hin- und herschwingenden Laugenbehälter und dem Antriebsmotor bestehendes Aggregat 2 angeordnet. Das Aggregat 2 ist mittels zweier Federn 3 am Gehäuse befestigt und zwischen dem Boden 4 des Gehäuses 1 und dem Aggregat 2 sind zwei Stoßdämpfer 5 angeordnet.

Die Stoßdämpfer 5 sind mit den Enden 6 und 7 mit dem Aggregat 2 und dem Boden 4 verbunden. Bodenseitig ist jeder Stoßdämpfer 5 mit einem Verbindungsteil 8 versehen, das in den Fig. 3 und 4 in vergrößertem Maßstab dargestellt ist. Die Verbindungsteile 8 sind im wesentlichen U-förmig ausgebildet und greifen durch die Verstärkungsstreben 9 oder durch den Boden 4.

Ein Verbindungsteil 8 ist in Fig. 5, 6, 7 dargestellt und besteht aus zwei Wangen 10. Diese Wangen 10 sind miteinander durch einen federnden Verbindungssteg 11 verbunden. Die Wangen 10 sind an beiden Enden mit einem abgewinkelten Teil 12 versehen, in die Aussparungen 13 eingearbeitet sind. Die Wangen 10 sind ferner mit Bohrungen 14 versehen, durch die Bolzen 15 gesteckt werden können.

Die Wangen 10 sind ferner mit Ausnehmungen 20 versehen, so daß sie mit Füßen 19 durch die Aussparungen 18 greifen.

In Fig. 3 und 4 ist dargestellt wie das Verbindungsteil 8 an einem Ende eines Stoßdämpfers 5 montiert werden kann.

Zur Befestigung des Verbindungsteiles 8 an dem Stoßdämpfer 5 wird ein Bolzen 15 durch die Bohrungen 14 in den Wangen 10 und das Auge 16 des Stoßdämpfers 5 gesteckt.

Auf den Bolzen 15 ist eine Mutter 17 so aufgesetzt, daß die Wangen 10 gegen die Federkraft des Verbindungssteges 11 nur wenig gespannt werden.

Der Stoßdämpfer 5 kann nun mit dem Geräteboden 4 oder, wie in diesem Beispiel dargestellt, mit der Verstärkungsstrebe 9 verbunden werden. Die Verstärkungsstrebe 9 ist mit Löchern 18 versehen, durch welche die Füße 19 der Wangen 10 gesteckt werden können. Die Füße 19 sind mit Aussparungen 13 versehen, welche die Ränder der Löcher 18 umgreifen können.

Beim Festziehen der Mutter 17 werden die Wangen 10 mit ihren Aussparungen 13 fest gegen die Ränder der Löcher 18 gedrückt, wodurch eine starre Verbindung zwischen Stoßdämpfer und Geräteboden hergestellt wird. Damit die Wangen 10 beim Andrehen der Mutter 17 nicht den Stoßdämpfer verklemmen, ist zwischen den Wangen 10 eine Distanzbuchse 21 eingesetzt. Anstelle der Mutter 17 kann nach Fig. 5 auch eine Stanzmutter 22 eingesetzt werden.

Auf diese Weise wird eine feste Verbindung des Stoßdämpfers mit dem Gehäuse hergestellt, die einfach und schnell montierbar ist.

**Patentansprüche**

1. Waschmaschine, deren Waschaggregat (2) mittels Federn (3) und Stoßdämpfer (5) im Maschinengehäuse (1) schwingbeweglich gelagert ist und wobei zwischen jedem Stoßdämpferende mit dem Gehäuse (1) und dem Aggregat (2) ein Verbindungsteil (8) vorgesehen ist, dadurch gekennzeichnet, daß an jedem Stoßdämpfer (5) mindestens eines der Verbindungsteile (8) zum Maschinengehäuse (1) oder zum Waschaggregat (2) aus zwei gegeneinander federnden Wangen (10) beteht, die mittels einer Schraubverbindung (15, 17) am Stoßdämpfer (5) befestigt und in geöffnetem Zustand frei durch am Maschinengehäuse (1) oder Waschaggregat (2) vorgesehene Aufnahmeöffnungen (18) hindurchführbar und durch Anziehen der Schraubverbindung (15, 17) verklemmbar sind.

2. Waschmaschine nach Anspruch 1, dadurch gekennzeichnet, daß das Verbindungsteil (8) derart U-förmig ausgebildet ist, daß die Schenkel die Wangen (10) an einem Verbindungssteg (11) bilden.

3. Waschmaschine nach Anspruch 1 oder 2, dadurch gekennzeichnet, daß die einander zugewandten Seiten der beiden Wangen (10) abgewinkelte Teile (12) mit eingearbeiteten Aussparungen (13) aufweisen, welche die Ränder der Aufnahmeöffnungen (18) umgreifen können.

4. Waschmaschine nach Anspruch 1, 2 oder 3, dadurch gekennzeichnet, daß zwischen den beiden Wangen (10) eine Distanzbuchse (21) vorgesehen ist.

**Claims**

1. A washing machine, the washing unit (2) of which is mounted in the machine housing (1) so as to be movable in an oscillating manner by means of springs (3) and shock absorbers (5) and in which between each shock absorber end with the housing (1) and the unit (2) a connecting piece (8) is provided, characterised in that on each shock absorber (5) at least one of the connecting pieces (8) to the machine housing (1) or to the washing unit (2) consists of two side pieces (10) which are resilient with respect to each other, and which by means of a screw connection (15, 17) are secured to the shock absorber (5) and in opened state are able to be passed freely through receiving openings (18) provided on the machine housing (1) or washing unit (2) and are able to be locked by tightening the screw connection (15, 17).

2. A washing machine according to Claim 1, characterised in that the connecting piece (8) is constructed in a U shape such that the shanks form the side pieces (10) on a connecting cross-piece (11).

3. A washing machine according to Claim 1 or 2, characterised in that the sides of the two side pieces (10), facing each other, have angular parts (12) with worked-in recesses (13), which are able to embrace the edges of the receiving openings (18).

4. A washing machine according to Claim 1, 2 or 3, characterised in that between the two side pieces (10) a spacer bush (21) is provided.

**Revendications**

1. Machine à laver dont le groupe de lavage (2) est porté dans la carrosserie (1) de la machine, avec liberté d'oscillation, au moyen de ressorts (3) et d'amortisseurs (5), et dans laquelle entre chaque extrémité d'amortisseur est prévue, une pièce de liaison (8) avec la carrosserie (1) et avec le groupe (2), machine caractérisée par le fait qu'à chaque amortisseur (5) au moins l'une des pièces de liaison (8) avec la carrosserie (1) de la machine ou avec le groupe de lavage (2) est constituée de deux joues (10), qui font ressort l'une par rapport à l'autre, qui sont fixées à l'amortisseur (5) au moyen d'une liaison par vis (15,17) et qui, à l'état ouvert, peuvent être facilement introduites dans les ouvertures de réception (18) prévues dans la carrosserie (1) de la machine ou dans le groupe de lavage (2) et être bridées par serrage de la liaison par vis (15,17).

2. Machine à laver selon la revendication 1, caractérisée par le fait que la pièce de liaison (8) a la forme d'un U tel que les ailes forment les joues (10) sur une âme (11).

3. Machine à laver selon la revendication 1 ou 2, caractérisée par le fait que les faces, orientées l'une vers l'autre, des deux joues (10) présentent des parties contre-coudées (12) avec des encoches usinées (13) qui peuvent enserrer les bords des ouvertures de réception (18).

4. Machine à laver selon la revendication 1, 2 ou 3, caractérisée par le fait qu'entre les deux joues (12) est prévue une douille d'écartement (21).

Fig.1

Fig. 2

Fig.3

Fig.4

Fig.5

Fig.6

Fig.7